# EUROPÄISCHE PATENTANMELDUNG

(11) **EP 4 306 203 A1**
(43) Veröffentlichungstag der Anmeldung: **17.01.2024**
(21) Anmeldenummer: 23185094.2
(22) Anmeldetag: 12.07.2023
(51) Int. Cl.: B01D 53/34, B01D 53/00, B01D 53/44, F23G 7/06

(54) **VERFAHREN UND ANLAGE ZUR REINIGUNG VON ABLUFT MITTELS REGENERATIVER THERMISCHER OXIDATION**

(30) Priorität: 15.07.2022 DE 102022117743
(71) Anmelder: Luz, Werner, 41564 Kaarst (DE)
(72) Erfinder: Luz, Werner, 41564 Kaarst (DE)
(74) Vertreter: Patentanwälte Bauer Vorberg Kayser

(57) **Zusammenfassung**

Die Erfindung betrifft ein Verfahren zum Betreiben einer Anlage (10) zur Reinigung von Abluft mit organischen Bestandteilen mittels regenerativer thermischer Oxidation, wobei das Verfahren dazu geeignet ist Abluft mit mindestens zwei Gruppen von organischen Bestandteilen zu reinigen, ausgewählt aus Niedrigsiedern, Mittelsiedern und Hochsiedern, wobei Abluft über einen Einlass (14) als zu reinigende Abluft einem Reaktionsraum (12) zugeführt wird und über einen Auslass (16) aus dem Reaktionsraum (12) als gereinigte Abluft abgeführt wird, wobei die Abluft in Strömungsrichtung (5) zunächst einen Niedrig-Temperatur-Reaktionsbereich (20) zur Oxidation der Gruppe an organischen Bestandteilen in der Abluft mit der niedrigsten Oxidations-temperatur und anschließend einen Hoch-Temperatur-Reaktionsbereich (24) zur Oxidation der Gruppe an organischen Be-standteilen in der Abluft mit der höchsten Oxidationstemperatur durchströmt, wobei der Niedrig-Temperatur-Reaktionsbereich (22) eine erste Wärmespeichereinheit (26) aufweist und wobei der Hoch-Temperatur-Reaktionsbereich (24) eine letzte Wärmespeichereinheit (30) aufweist.

## Beschreibung

Die Erfindung betrifft ein Verfahren zur Reinigung von Abluft mit organischen Bestandteilen mittels regenerativer thermischer Oxidation gemäß Patentanspruch 1. Die Erfindung betrifft ferner eine Anlage zur Reinigung von Abluft mit organischen Bestandteilen mittels regenerativer thermischer Oxidation gemäß Patentanspruch 9.

Abluft, die zum Beispiel aus Beschichtungsanlagen, Lackierkabinen, einem Tank oder einem Lagerraum stammt, kann unter Umständen mit organischen Bestandteilen belastet sein. Um diese belastete Abluft in die Atmosphäre zu geben, ist es vorgeschrieben, die Abluft zuvor von den organischen Bestandteilen zu reinigen. Typischerweise enthält eine solche mit organischen Bestandteilen belastete Abluft unterschiedliche organische Bestandteile, die nach einem Siedepunktsbereich klassifiziert sind und unterschiedliche Verbrennungstemperaturen aufweisen. Die organischen Bestandteile sind in Niedrigsieder, Mittelsieder und Hochsieder eingeteilt.

Ein bekanntes Verfahren für die Reinigung der Abluft ist die regenerative thermische Oxidation. Dazu wird die belastete Abluft mit einer externen Heizquelle erhitzt und die in der Abluft befindlichen organischen Bestandteile bzw. Kohlenwasserstoffe oxidieren bzw. verbrennen. Die bei der Oxidation entstehende Wärme wird üblicherweise an einen Regenerator abgegeben, der zur Aufheizung darauf folgender Abluft dient. Als Heizquelle kann zum Beispiel ein Gasbrenner vorgesehen sein, der die Abluft so weit erhitzt, dass sämtliche organischen Bestandteile verbrennen.

Aus dem Stand der Technik sind dabei Anlagen bekannt, die mehrere Regeneratoren aufweisen, welche jeweils wechselweise von noch unbehandelter, kühlerer Abluft und bereits behandelter, aufgewärmter Abluft durchströmt werden. Der Brennraum mit der Heizquelle ist dabei strömungstechnisch zwischen den Regeneratoren angeordnet. Die Verbrennung der Abluft erfolgt gemäß Stand der Technik für alle organischen Bestandteile in einem einzigen Brennraum. Um die wechselweise Durchströmung der Regeneratoren zu realisieren sind insbesondere Klappenmechanismen vorgesehen.

Die Aufgabe der vorliegenden Erfindung ist es, ein Verfahren und eine Anlage zur Reinigung von Abluft zur Verfügung zu stellen, welche möglichst sicher sind.

Die Lösung der Aufgabe erfolgt mit den Merkmalen der unabhängigen Ansprüche. Weitere praktische Ausführungsformen und Vorteile sind in Verbindung mit den abhängigen Ansprüchen beschrieben.

Die Erfindung betrifft ein Verfahren zum Betreiben einer Anlage zur Reinigung von Abluft mit organischen Bestandteilen mittels regenerativer thermischer Oxidation. Das Verfahren dient dabei dazu Abluft umfassend organische Bestandteile mindestens zweier Gruppen, ausgewählt aus Niedrigsiedern, Mittelsiedern und Hochsiedern, zu reinigen. Die organischen Bestandteile sind nach dem jeweiligen Siedebereich bezeichnet, wobei Niedrigsieder eine Siedetemperatur von maximal 100 °C aufweisen, Mittelsieder eine Siedetemperatur zwischen 100-150 °C und Hochsieder eine Siedetemperatur von mehr als 150 °C. Die Oxidations- bzw. Verbrennungstemperaturen liegen für Niedrigsieder zwischen 300°C und 650°C, für Mittelsieder zwischen 400°C und 700°C und für Hochsieder zwischen 600°C und 700°C. Typische Niedrigsieder sind Alkohole und Aceton, typische Mittelsieder sind Ketone und typische Hochsieder Benzol, Benzin und Isophron.

Für das erfindungsgemäße Verfahren wird die Abluft wird dabei über einen Einlass als zu reinigende Abluft einem Reaktionsraum zugeführt und über einen Auslass aus dem Reaktionsraum als gereinigte Abluft abgeführt. Die Abluft durchströmt in Strömungsrichtung zunächst einen Niedrig-Temperatur-Reaktionsbereich zur Oxidation der Gruppe an organischen Bestandteilen in der Abluft mit der niedrigsten Oxidationstemperatur. Anschließend durchströmt die Abluft einen Hoch-Temperatur-Reaktionsbereich zur Oxidation der Gruppe an organischen Bestandteilen in der Abluft mit der höchsten Oxidationstemperatur. Insbesondere werden in dem Niedrig-Temperatur-Reaktionsbereich die Niedrigsieder oxidiert und in dem Hoch-Temperatur-Reaktionsbereich die Hochsieder. Insbesondere dient die Oxidation der Niedrigsieder dem Start der gesamten Oxidation der Abluft, die - möglichst ohne weitere Energiezufuhr - im Folgenden auch die Oxidation der Mittelsieder und Hochsieder bewirkt.

Der Niedrig-Temperatur-Reaktionsbereich weist eine erste Wärmespeichereinheit auf und der Hoch-Temperatur-Reaktionsbereich weist eine letzte Wärmespeichereinheit auf. Bei der ersten Wärmespeichereinheit und/oder der letzten Wärmespeichereinheit handelt es sich insbesondere um ein keramisches Element, vorzugsweise eine Schüttgutwand, eine Wand aus Wabenbausteinen oder einen Sattelkörper.

Die Abluft weist in dem Niedrig-Temperatur-Reaktionsbereich insbesondere eine Temperatur zwischen 600°C und 700°C auf. In dem Hoch-Temperatur-Reaktionsbereich weist die Abluft insbesondere eine Temperatur von 800 °C bis über 900°C auf.

Es handelt es sich bei dem Niedrig-Temperatur-Reaktionsbereich und dem Hoch-Temperatur-Reaktionsbereich um zwei unterschiedliche Bereiche, die voneinander beabstandet sind, sich aber in demselben Reaktionsraum befinden. Als Reaktionsraum wird entsprechend der Raum bezeichnet, in welchem eine Temperatur herrscht, ab welcher die Oxidation der organischen Bestandteile beginnt.

Die einzelnen Reaktionsbereiche mit der jeweiligen Wärmespeichereinheit haben den Vorteil, dass die Erhitzung der Abluft langsamer und die Verbrennung der mindestens zwei Gruppen an organischen Bestandteilen erst nacheinander erfolgt. Zum Beispiel starten erst die Niedrigsieder mit der Oxidation. Durch die exotherme Reaktion der Niedrigsieder wird die Abluft weiter erwärmt, so dass in dem nachfolgenden Reaktionsbereich die Mittelsieder oder die Hochsieder oxidiert werden. Die Wärmespeichereinheiten speichern dabei einen Teil der durch die die Oxidation freiwerdenden Wärmeenergie, um diese an die nachfolgend strömende Abluft abzugeben und diese bereits vorzuwärmen. Insbesondere läuft das Verfahren, insbesondere nach einer Anlaufzeit, autotherm. In dem autothermen Zustand ist keine Zuführung externer Energie erforderlich.

Durch die örtliche Separation der Oxidation bzw. Verbrennung der einzelnen Gruppen an organischen Bestandteilen wird ein Überhitzen des Reaktionsraumes wirksam vermieden und vor allem das Risiko einer Explosion erheblich gesenkt. Das Verfahren lässt sich - wie im Folgenden noch erläutert - besonders gut steuern und ist sehr energieeffizient.

Das Verfahren eignet sich insbesondere zur Reinigung von niedrigen Abluftvolumina im Bereich von 3.000 Nm³/h bei wie z.B. bei Druckmaschinen als auch zur Reinigung von hohen Abluftvolumina im Bereich von 25.000 - 100.000 Nm³/h (z.B. einer Beschichtungsmaschine). Zudem eignet sich das Verfahren zur Reinigung von Abluft mit niedriger Schadstoffmenge von ca. 2 g C/Nm³ oder auch mit hoher Schadstoffmenge von ca. 10 g C/Nm³. Die gereinigte Abluft weist insbesondere nach Durchlaufen des Verfahrens weniger als 20 mg C/Nm³ auf, sodass die gereinigte Abluft in die Atmosphäre abgeführt werden kann.

In einer praktischen Ausführungsform des erfindungsgemäßen Verfahrens weist mindestens ein Reaktionsbereich eine Heizeinheit auf, wobei die Heizleistung der mindestens einen Heizeinheit in Abhängigkeit der aktuellen Temperatur der Abluft und/oder der Konzentration der organischen Bestandteile in der Abluft eingestellt wird. Insbesondere weisen sämtliche Reaktionsbereiche eine Heizeinheit auf. Insbesondere wird die Heizleistung sämtlicher Heizeinheiten in Abhängigkeit der aktuellen Temperatur der Abluft und/oder der Konzentration der organischen Bestandteile in der Abluft eingestellt. Dazu ist/sind insbesondere in dem Reaktionsraum mindestens ein Sensor und vorzugsweise mehrere Sensoren zur Messung der Temperatur der Abluft und/oder zur Messung der Konzentration an organischen Bestandteilen angeordnet. Insbesondere handelt es sich bei dem mindestens einen Sensor zur Messung der Konzentration der organischen Bestandteile um einen Flammen-Ionisations-Detektor. Die mindestens eine Heizeinheit dient insbesondere dazu, die Abluft nach Start des Verfahrens während einer Anlaufphase aufzuheizen. Ferner kann die Heizeinheit dazu dienen, im Falle, dass die Konzentration an organischen Bestandteilen in der Abluft nicht ausreicht, um das Verfahren autotherm zu betreiben, zusätzliche Heizleistung zur Verfügung zu stellen, um die Abluft für die Oxidation ausreichend zu erhitzen. Insbesondere dann, wenn die Konzentration der organischen Bestandteile in der Abluft geringer als 1,5 g C/Nm³ ist, wird Energie über die mindestens eine Heizeinheit zugeführt.

Die Heizeinheit ist insbesondere benachbart zu einer korrespondierenden Wärmeeinheit angeordnet und gibt auch Wärme an die Wärmeeinheit ab. Insbesondere ist die Heizeinheit von der Wärmeeinheit umgeben, um einen möglichst effizienten Wärmeübertrag zu ermöglichen.

Als mindestens eine Heizeinheit dient insbesondere ein elektrisch betriebener Heizstab, insbesondere eine elektrisch betriebene Heizwendel.

Für den Fall eines Stromausfalls kann stromaufwärts des Reaktionsraumes eine zusätzliche Heizeinheit angeordnet sein, die unabhängig von einer Stromversorgung ist. Insbesondere ist hier ein Gasbrenner angeordnet, mittels welchem die in den Reaktionsraum strömende, zu reinigende Abluft, auf die Starttemperatur zur Oxidierung der Niedrigsieder bzw. der Gruppe an organischen Bestandteilen in der Abluft mit der niedrigsten Verbrennungstemperatur, aufgeheizt wird.

Insbesondere durchströmt die Abluft während eines kontinuierlichen Betreibens der Anlage zur Reinigung von Abluft zwischen der ersten Wärmespeichereinheit und der letzten Wärmespeichereinheit einen einzigen Strömungsweg, wobei der Strömungsweg unveränderlich ist. Damit sind ausdrücklich nicht Verfahren und Anlagen gemeint, in welchen während des Betriebs eine Strömungsumkehr der Abluft erfolgt, um zum Beispiel wechselweise verschiedene Regeneratoren zu durchströmen. Durchströmt die Abluft zwischen der ersten Wärmespeichereinheit und der letzten Wärmespeichereinheit nur einen unveränderlichen Strömungsweg, kann weitestgehend auf mechanische Bauteile wie Klappen zur Lenkung der Strömung verzichtet werden.

In einer weiteren praktischen Ausführungsform des erfindungsgemäßen Verfahrens ist zwischen dem Niedrig-Temperatur-Reaktionsbereich und dem Hoch-Temperatur-Reaktionsbereich ein Mittel-Temperatur-Reaktionsbereich angeordnet, wobei die Abluft den Mittel-Temperatur-Reaktionsbereich zur Oxidation von Mittelsiedern durchströmt. Der Mittel-Temperatur-Reaktionsbereich weist dabei eine mittlere Wärmespeichereinheit auf. Insbesondere wir die Abluft in dem Mittel-Temperatur-Reaktionsbereich auf 700°C bis 800°C erhitzt. Der Mittel-Temperatur-Reaktionsbereich weist insbesondere eine Heizeinheit auf.

In eine weiteren praktischen Ausführungsform des erfindungsgemäßen Verfahrens ist stromabwärts des Hoch-Temperatur-Reaktionsbereiches mindestens ein erster Wärmetauscher angeordnet, wobei mittels des ersten Wärmetauschers Abluft stromaufwärts des Einlasses vorgewärmt wird. Die Vorerwärmung der Abluft erfolgt insbesondere so weit, dass die Oxidation im Niedrig-Temperatur-Reaktionsbereich durch zusätzlichen Wärmeeintrag, entweder der vorgewärmten Wärmespeichereinheit oder der ersten Heizeinheit, sofort startet. Das Verfahren ist insofern besonders effizient, als die Abwärme der bereits gereinigten Abluft genutzt wird, um noch zu reinigende Abluft aufzuheizen. Im Bereich des ersten Wärmetauschers wird Abluft, die typischerweise zwischen 200°C bis 350°C aufweist, auf 500 °C bis ca. 600°C vorgeheizt. Es handelt sich bei dem ersten Wärmetauscher insbesondere um einen Luft-Luft-Wärmetauscher, wobei mehrere Wendeln um den Reaktionsraum herumgeführt sind, die von der noch ungereinigten Abluft durchströmt werden.

Weiterhin kann stromabwärts des Hoch-Temperatur-Reaktionsbereiches, sowie vorzugsweise stromaufwärts des ersten Wärmetauschers, mindestens ein zweiter Wärmetauscher angeordnet sein, wobei Fluid zum Betrieb einer vorgeschalteten Vorrichtung, vorzugsweise aus welcher vorgeschalteten Vorrichtung die Abluft gereinigt wird, erwärmt wird. Das aufgewärmte Fluid kann zum Beispiel in einer Beschichtungsanlage insbesondere zum Aufheizen einer Reinigungsstation, einer Passivierung, von Heißwasser oder eines Thermoöl-Kessel dienen. Insbesondere weist die Vorrichtung, deren Abluft gereinigt wird, selbst keine weitere Heizquelle mehr auf.

Mit dem vorstehend genannten ersten Wärmetauscher und/oder zweiten Wärmetauscher kann insbesondere die bereits gereinigte Abluft gekühlt werden. Nachdem die gereinigte Abluft den Reaktionsraum verlässt, weist die gereinigte Abluft eine Temperatur von ca. 800 °C auf. Die gereinigte Abluft wird insbesondere auf weniger als 180 °C gekühlt, um über den Auslass in die Atmosphäre geführt zu werden.

Wie vorstehend bereits erwähnt, sind die benachbarten Reaktionsbereiche insbesondere voneinander beabstandet. Insbesondere strömt die Abluft zwischen zwei benachbarten Reaktionsbereichen jeweils für eine Verweildauer von mindestens 0,5 s und bevorzugt für mindestens 1 s.

Um das Verfahren besonders umweltfreundlich betreiben zu können, wird die mindestens eine vorstehend beschriebene Heizeinheit mit regenerativer Energie betrieben. Vorzugsweise wird die mindestens eine Heizeinheit mittels über Photovoltaik-Technik gewonnener elektrischer Energie und/oder mittels elektrischer Energie aus Windkraft betrieben.

Wie vorstehend bereits ausgeführt, wird die Abluft in dem Niedrig-Temperatur-Reaktionsbereich auf einen Temperaturbereich von 600°C bis 700°C erwärmt und/oder die Abluft wird in dem Hoch-Temperatur-Reaktionsbereich auf mindestens 800°C erwärmt und/oder die Abluft wird in dem Mittel-Temperatur-Reaktionsbereich auf einen Temperaturbereich von 700°C bis 800°C erwärmt.

Um die Heizeinrichtungen optimal und möglichst energiesparend einstellen zu können, wird Temperatur der Abluft und/oder die Konzentration der organischen Bestandteile in der Abluft in dem Reaktionsraum gemessen wird. Insbesondere werden die Temperatur und/oder die Konzentration der organischen Bestandteile an mehreren Stellen des Reaktionsraumes gemessen, insbesondere jeweils vor Eintritt in einen der Reaktionsbereiche. Dafür vorgesehene Temperatursensoren weisen insbesondere einen Messbereich von 200°C bis 1050°C aus. Sensoren zur Messung der Konzentration weisen insbesondere einen Messbereich von 100 bis 8000 mg C/Nm³ auf.

Wird während des Verfahrens festgestellt, dass die Temperatur des Abgases zu hoch ist, insbesondere bereits am Niedrig-Temperatur-Reaktionsbereich, so kann insbesondere kältere Abluft zugeführt werden. Insbesondere kann die Abluft stromaufwärts des Reaktionsraums durch einen Bypass strömen, so dass diese Abluft nicht über den ersten Wärmetauscher erwärmt wird.

Die Erfindung betrifft auch eine Anlage zur Reinigung von Abluft mittels thermischer Oxidation, insbesondere gemäß dem vorstehend beschriebenen Verfahren. Die Anlage dient dazu Abluft umfassend mindestens zwei Gruppen von organischen Bestandteilen ausgewählt aus Niedrigsiedern, Mittelsiedern und Hochsiedern zu reinigen.

Die Anlage weist einen Einlass für zu reinigende Abluft und einen Auslass für gereinigte Abluft auf, wobei zwischen dem Einlass und dem Auslass ein Reaktionsraum angeordnet ist. Der Reaktionsraum weist einen Niedrig-Temperatur-Reaktionsbereich auf zur Oxidation der Gruppe an organischen Bestandteilen in der Abluft mit der niedrigsten Oxidationstemperatur, wobei der Niedrig-Temperatur-Reaktionsbereich eine erste Wärmespeichereinheit aufweist. Der Niedrig-Temperatur-Reaktionsbereich dient insbesondere zur Oxidation von Niedrigsiedern. Der Reaktionsraum weist ferner einen Hoch-Temperatur-Reaktionsbereich auf zur Oxidation der Gruppe an organischen Bestandteilen in der Abluft mit der höchsten Oxidationstemperatur, wobei der Hoch-Temperatur-Reaktionsbereich eine letzte Wärmespeichereinheit aufweist. Der Hoch-Temperatur-Reaktionsbereich dient insbesondere zur Oxidation von Hochsiedern.

Wie vorstehend bereits dargelegt, wird durch die örtliche Verteilung der Reaktionsbereiche, in welchen jeweils nur eine Gruppe bzw. nur ein Teil der organischen Bestandteile in der Abluft oxidiert wird, das Risiko eines Überhitzen der Anlage und die Explosionsgefahr minimiert. Die einzelnen Reaktionsbereiche sind voneinander beabstandet und weisen jeweils eine Wärmespeichereinheit zur Rückgewinnung der bei der Oxidierung entstandenen Wärme auf. Die Wärmespeichereinheiten geben die aufgenommene Wärme dann an nachfolgend strömende Abluft zum Teil wieder ab.

In einer praktischen Ausführungsform der erfindungsgemäßen Anlage weist mindestens ein Reaktionsbereich mindestens eine Heizeinheit auf, wobei die Heizleistung dieser mindestens einen Heizeinheit in Abhängigkeit der Temperatur der Abluft und/oder der Konzentration der organischen Bestandteile einstellbar ist. Als mindestens eine Heizeinheit dient insbesondere ein elektrisch betriebener Heizstab.

Insbesondere sind der Niedrig-Temperatur-Reaktionsbereich und der Hoch-Temperatur-Reaktionsbereich in einer Strömungsrichtung der Abluft betrachtet aufeinanderfolgend derart in demselben Reaktionsraum angeordnet, dass die Abluft während eines kontinuierlichen Betreibens der Anlage zur Reinigung von Abluft einen einzigen Strömungsweg durchströmt, wobei der Strömungsweg unveränderlich ist. Dadurch kann auf die Anordnung von Klappen zur wechselweisen Leitung der Strömung verzichtet werden.

Zwischen dem Niedrig-Temperatur-Reaktionsbereich und dem Hoch-Temperatur-Reaktionsbereich ist insbesondere ein Mittel-Temperatur-Reaktionsbereich angeordnet, wobei der Mittel-Temperatur-Reaktionsbereich eine mittlere Wärmespeichereinheit aufweist. Der Mittel-Temperatur-Reaktionsbereich dient insbesondere zur Oxidation von Mittelsiedern.

Durch die Anordnung von drei separaten Temperaturbereichen wird die Oxidation der Niedrigsieder, Mittelsieder und Hochsieder örtlich voneinander getrennt und die Anlage bietet so einen guten Schutz gegen Überhitzung und Explosionen.

Stromabwärts des Hoch-Temperatur-Reaktionsbereiches ist insbesondere mindestens ein erster Wärmetauscher derart angeordnet, dass mittels des ersten Wärmetauschers Abluft stromaufwärts des Einlasses vorgewärmt wird. Insbesondere wird dabei die zu reinigende Abluft auf eine Temperatur bis 600°C vorgewärmt, so dass die Abluft im Reaktionsraum nur einer geringen Wärmezufuhr bedarf, sodass die Oxidation startet.

In einer weiteren praktischen Ausführungsform ist stromabwärts des Hoch-Temperatur-Reaktionsbereiches mindestens ein zweiter Wärmetauscher derart angeordnet, dass Luft zum Betrieb einer vorgeschalteten Vorrichtung erwärmt wird. So kann Wärme aus der Anlage an die vorgeschaltete Vorrichtung rückgeführt werden und die Vorrichtung und die Anlage besonders energieeffizient betrieben werden.

Zwischen zwei benachbarten Reaktionsbereichen ist insbesondere jeweils ein Abstand ausgebildet. Der Freiraum zwischen den Reaktionsbereichen dient insbesondere zur Reaktion der Abluft, sodass hier jeweils sämtliche zu dem entsprechenden Reaktionsbereich korrespondierenden organischen Bestandteile oxidieren.

Die Anlage kann besonders umweltfreundlich betrieben werden, wenn die mindestens eine Heizeinheit mit einer Quelle zur Erzeugung regenerativer Energie verbunden ist. So kann die Anlage unmittelbar mit einer Solarzelle und/oder einer Windkraftanlage verbunden sein.

Insbesondere zur Steuerung der Anlage und vor allem der mindestens einen Heizeinheit ist mindestens ein Temperatursensor und/oder ein Konzentrationsmessgerät in dem Reaktionsraum angeordnet. Insbesondere ist jeweils ein Temperatursensor und/oder ein Konzentrationsmessgerät stromaufwärts eines Reaktionsbereiches angeordnet.

Weitere praktische Ausführungsformen und Vorteile sind nachfolgend in Zusammenhang mit der Figur beschrieben. Es zeigt:

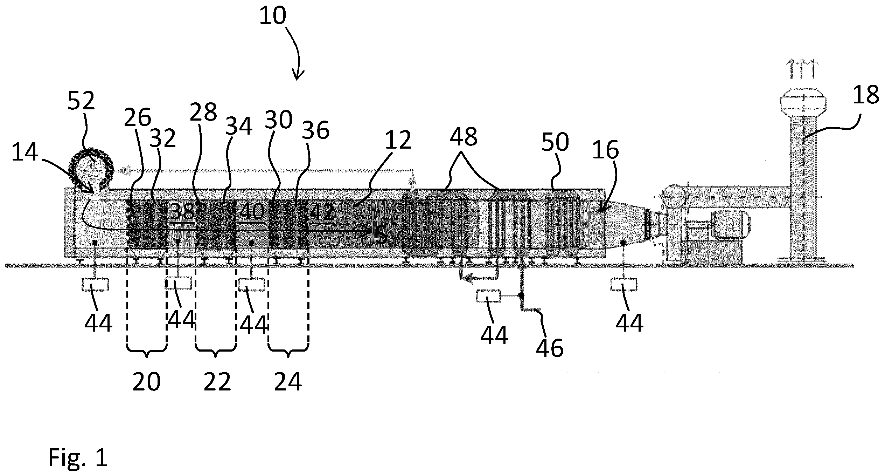

- Fig. 1: eine Anlage zur Reinigung von Abluft mittels regenerativer thermischer Oxidation in einer schematischen Darstellung im Querschnitt.

In Fig. 1 ist eine Anlage 10 zur Reinigung von Abluft mit organischen Bestandteilen gezeigt. Die zu reinigende Abluft beinhaltet hier drei Gruppen an organischen Bestandteilen, nämlich Niedrigsieder, Mittelsieder und Hochsieder.

Die Anlage 10 umfasst einen Reaktionsraum 12 mit einem Einlass 14 zur Einströmung der zu reinigenden Abluft und einen Auslass 16 zum Ausströmen gereinigter Abluft aus dem Reaktionsraum 12. Die Abluft durchströmt den Reaktionsraum 12 in Strömungsrichtung S. die Abluft strömt in dem Reaktionsraum 12 während des Betriebs der Anlage 10 nur entlang dieser Strömungsrichtung S. Stromabwärts des Auslasses 16 ist ein Kamin 18 angeordnet, durch welchen die gereinigte Abluft in die Atmosphäre strömt.

In dem Reaktionsraum 12 sind in Strömungsrichtung S betrachtet hintereinander ein Niedrig-Temperatur-Reaktionsbereich 20, ein Mittel-Temperatur-Reaktionsbereich 22 und ein Hoch-Temperatur-Reaktionsbereich 24 angeordnet.

Der Niedrig-Temperatur-Reaktionsbereich 20 weist eine erste Wärmespeichereinheit 26 auf, der Mittel-Temperatur-Reaktionsbereich 22 weist eine mittlere Wärmespeichereinheit 28 auf und der Hoch-Temperatur-Reaktionsbereich 24 weist eine letzte Wärmespeichereinheit 30 auf. Bei den Wärmespeichereinheiten 26, 28, 30 handelt es sich jeweils um Schüttgutwände aus Keramik.

Der Niedrig-Temperatur-Reaktionsbereich 20 weist hier eine erste Heizeinheit 32 auf, der Mittel-Temperatur-Reaktionsbereich 22 weist eine mittlere Heizeinheit 34 auf und der Hoch-Temperatur-Reaktionsbereich 24 weist eine letzte Heizeinheit 36 auf. Bei den Heizeinheiten 32, 34, 36 handelt es sich jeweils um elektrisch betriebene Heizwendeln mit zwei Heizdrähten.

Die Heizeinheiten 32, 34, 36 sind mit Einheiten zur regenerativen Energieerzeugung, wie mit mindestens einer Solarzelle oder einer oder mehrerer Windkraftanlagen verbunden (nicht dargestellt).

Der Niedrig-Temperatur-Reaktionsbereich 20 dient zur Oxidierung etwaiger in der Abluft vorhandener Niedrigsieder, der Mittel-Temperatur-Reaktionsbereich 22 dient zur Oxidierung etwaiger in der Abluft vorhandener der Mittelsieder und der Hoch-Temperatur-Reaktionsbereich 24 dient zur Oxidierung etwaiger in der Abluft vorhandener Hochsieder.

Die drei Reaktionsbereiche 20, 22, 24 sind jeweils voneinander beabstandet. Zwischen dem Niedrig-Temperatur-Reaktionsbereich 20 und dem Mittel-Temperatur-Reaktionsbereich 22 ist ein Freiraum 38 ausgebildet, für dessen Durchströmung die Abluft mindestens 0,5 s benötigt. Zwischen dem Mittel-Temperatur-Reaktionsbereich 20 und dem Hoch-Temperatur-Reaktionsbereich 22 ist ein Freiraum 40 ausgebildet, für dessen Durchströmung die Abluft ebenfalls mindestens 0,5 s benötigt. Auch stromabwärts des Hoch-Temperatur-Reaktionsbereich schließt sich ein Freiraum 42 an. Das heißt, an jeden Reaktionsbereich 20, 22, 24 sich in Strömungsrichtung S betrachtet ein Freiraum 38, 40, 42 an.

Die Anlage 10 weist zudem mehrere Temperatursensoren und Sensoren zur Erfassung der lokalen Konzentration an organischen Bestandteilen auf. Diese Sensoren sind hier schematisch als ein Rechteck 44 dargestellt. Die Sensoren 42 sind hier in einer Zuleitung 46, zwischen dem Einlass 14 und dem Niedrig-Temperaur-Reaktionsbereich 20, zwischen dem Niedrig-Temperatur-Reaktionsbereich 20 und dem Mittel-Temperatur-Reaktionsbereich 22, zwischen dem Mittel-Temperatur-Reaktionsbereich 22 und dem Hoch-Temperatur-Reaktionsbereich 24, sowie stromabwärts des Auslasses 16 vor dem Kamin 18 angeordnet.

Stromabwärts des Hoch-Temperatur-Reaktionsbereiches 24 ist ein erster Wärmetauscher 48 angeordnet. Es handelt sich um einen Luft-Luft Wärmetauscher, wobei sich die Zuleitung 46 wendelförmig um den Reaktionsraum 12 herum erstreckt. Es handelt sich hierbei um die Zuleitung 46 zur Führung der belasteten Abluft von der Vorrichtung (nicht dargestellt) zum Reaktionsraum 12.

Stromabwärts des ersten Wärmetauschers 48 ist ein zweiter Wärmetauscher 50 angeordnet, wobei der zweite Wärmetauscher 50 ein Luft-Luft Wärmetauscher ist und eine Versorgungsleitung 52 wendelförmig um den Reaktionsraum 12 herum angeordnet ist. Durch die Versorgungsleitung 52 strömendes Fluid dient zur Versorgung der Vorrichtung (nicht dargestellt) mit Wärme.

Im Folgenden wird anhand der Anlage 10 das Verfahren zur Reinigung von Abluft erläutert.

Abluft aus der Vorrichtung strömt dabei durch die Zuleitung 46 durch den ersten Wärmetauscher 48. Die Abluft hat ausgehend von der Vorrichtung eine Temperatur von 250°C und wird mittels des ersten Wärmetauschers 48 auf eine Temperatur von ca. 600°C erwärmt. Die Temperatur und Konzentration an organischen Bestandteilen werden mittels der Sensoren 42 stromaufwärts des ersten Wärmetauschers 48 erfasst. Anschließend strömt die vorgewärmte, zu reinigende Abluft bis zum Einlass 14 und durch den Einlass 14 in den Reaktionsraum 12.

In dem Reaktionsraum 12 wird die Temperatur der Abluft und die Konzentration an organischen Bestandteilen mittels Sensoren 42 ermittelt. Die Abluft erreicht den Niedrig-Temperatur-Reaktionsbereich 20. In der Anlaufphase des Verfahrens wird die Abluft hier mittels der Heizeinheit 26 auf eine Oxidationstemperatur von ca. 650°C aufgeheizt. Die bei der exothermen Reaktion freiwerdenden Wärme wird zum Teil von der ersten Wärmespeichereinheit 26 aufgenommen. Nach der Startphase, wenn die Wärmespeichereinheit 26 bereits erhitzt ist, wird die anströmende Abluft mittels der Wärmespeichereinheit 26 auf die Oxidationstemperatur für die Niedrigsieder aufgeheizt. Im autothermen Betrieb ist dann keine zusätzliche Energiezufuhr über die erste Heizeinheit 32 erforderlich.

Anschließend strömt die Abluft von dem Niedrig-Temperatur-Reaktionsbereich 20 zu dem Mittel-Temperatur-Reaktionsbereich 22. Die Verweildauer der Abluft zwischen dem Niedrig-Temperatur-Reaktionsbereich 20 und dem Mittel-Temperatur-Reaktionsbereich 22 beträgt hier in dem Freiraum mindestens 0,5 s.

In dem Mittel-Temperatur-Reaktionsbereich 22 erfolgt die Oxidierung der Mittelsieder. Die Abluft wird hier auf eine Temperatur von ca. 720°C erhitzt. In der Anlaufphase des Verfahrens kann ein zusätzlicher Wärmeeintrag durch die Heizeinheit 34 notwendig sein. Im autothermen Betrieb wird durch die Oxidierung der Niedrigsieder und die gespeicherte Wärme der mittleren Wärmespeichereinheit 28 ausreichend Wärme für die Oxidierung der Mittelsieder bereitgestellt.

Nach dem Durchströmen des zweiten Freiraums 40 durchströmt die Abluft den Hoch-Temperaur-Reaktionsbereich 24. Hier werden die Hochsieder oxidiert. Die Temperatur der Abluft beträgt hier ungefähr 820°C. Im autothermen Betrieb erhitzt sich die Abluft durch die exotherme Reaktion der Mittelsieder und dem zusätzlichen Wärmeeintrag durch die letzte Wärmespeichereinheit derart, dass auch die Hochsieder oxidieren. Lediglich in der Anlaufphase wird Wärme durch die letzte Heizeinheit 36 bereitgestellt.

Im Anschluss an den Hoch-Temperatur-Reaktionsbereich 24 durchströmt die Abluft den weiteren Reaktionsraum 12 bis zum Auslass, wobei die gereinigte Abluft einen Teil der durch die Oxidation entstandene Wärme im Bereich des ersten Wärmetauschers 48 und des zweiten Wärmetauschers 50 an nachströmende Abluft bzw. ein Fluid zur Erwärmung der Vorrichtung abgibt und somit abkühlt.

Der in Fig. 1 dargestellte Farbverlauf innerhalb des Reaktionsraues 12 repräsentiert die Temperatur, wobei eine dunklere Farbe eine höhere Temperatur in dem Reaktionsraum bedeutet.

Für den Fall eines Stromausfalles und damit eines Ausfalles der elektrisch betriebenen Heizeinheiten 32, 34, 36, weist die Anlage zusätzlich einen Gasbrenner 52 stromaufwärts des Einlasses 14 auf.

### Bezugszeichenliste

- 10: Anlage
- 12: Reaktionsraum
- 14: Einlass
- 16: Auslass
- 18: Kamin
- 20: Niedrig-Temperatur-Reaktionsbereich
- 22: Mittel-Temperatur-Reaktionsbereich
- 24: Hoch-Temperatur-Reaktionsbereich
- 26: erste Wärmespeichereinheit
- 28: mittlere Wärmespeichereinheit
- 30: letzte Wärmespeichereinheit
- 32: erste Heizeinheit
- 34: mittlere Heizeinheit
- 36: letzte Heizeinheit
- 38: erster Freiraum
- 40: zweiter Freiraum
- 42: dritter Freiraum
- 44: Sensor zur Temperaturmessung/Sensor zur Messung der Konzentration
- 46: Zuleitung
- 48: erster Wärmetauscher
- 50: zweiter Wärmetauscher
- 52: Gasbrenner

- S: Strömungsrichtung in dem Reaktionsraum

## Patentansprüche

1. Verfahren zum Betreiben einer Anlage (10) zur Reinigung von Abluft mit organischen Bestandteilen mittels regenerativer thermischer Oxidation, wobei das Verfahren dazu geeignet ist Abluft mit mindestens zwei Gruppen von organischen Bestandteilen zu reinigen, ausgewählt aus Niedrigsiedern, Mittelsiedern und Hochsiedern,
- wobei Abluft über einen Einlass (14) als zu reinigende Abluft einem Reaktionsraum (12) zugeführt wird und über einen Auslass (16) aus dem Reaktionsraum (12) als gereinigte Abluft abgeführt wird,
- wobei die Abluft in Strömungsrichtung (S) zunächst einen Niedrig-Temperatur-Reaktionsbereich (20) zur Oxidation der Gruppe an organischen Bestandteilen in der Abluft mit der niedrigsten Oxidationstemperatur und anschließend einen Hoch-Temperatur-Reaktionsbereich (24) zur Oxidation der Gruppe an organischen Bestandteilen in der Abluft mit der höchsten Oxidationstemperatur durchströmt,
- wobei der Niedrig-Temperatur-Reaktionsbereich (22) eine erste Wärmespeichereinheit (26) aufweist und wobei der Hoch-Temperatur-Reaktionsbereich (24) eine letzte Wärmespeichereinheit (30) aufweist.

2. Verfahren nach dem vorstehenden Anspruch,
**dadurch gekennzeichnet, dass**
mindestens ein Reaktionsbereich (22, 24) eine Heizeinheit (32, 36) aufweist und wobei die Heizleistung der mindestens einen Heizeinheit (32, 36) in Abhängigkeit der aktuellen Temperatur der Abluft und/oder der Konzentration der organischen Bestandteile in der Abluft eingestellt wird.

3. Verfahren nach einem der vorstehenden Ansprüche,
**dadurch gekennzeichnet, dass**
die Abluft während eines kontinuierlichen Betreibens der Anlage (10) zur Reinigung von Abluft zwischen der ersten Wärmespeichereinheit (26) und der letzten Wärmspeichereinheit (30) einen einzigen Strömungsweg durchströmt, wobei der Strömungsweg unveränderlich ist.

4. Verfahren nach einem der vorstehenden Ansprüche,
**dadurch gekennzeichnet, dass**
zwischen dem Niedrig-Temperatur-Reaktionsbereich (20) und dem Hoch-Temperatur-Reaktionsbereich (24) ein Mittel-Temperatur-Reaktionsbereich (22) zur Oxidation von in der Abluft enthaltenen Mittelsiedern angeordnet ist und wobei der Mittel-Temperatur-Reaktionsbereich (22) eine mittlere Wärmespeichereinheit (28) aufweist.

5. Verfahren nach einem der vorstehenden Ansprüche,
**dadurch gekennzeichnet, dass**
stromabwärts des Hoch-Temperatur-Reaktionsbereiches (24) mindestens ein erster Wärmetauscher (48) angeordnet ist, wobei mittels des ersten Wärmetauschers (48) Abluft stromaufwärts des Einlasses (14) vorgewärmt wird
und/oder dass stromabwärts des Hoch-Temperatur-Reaktionsbereiches (24) mindestens ein zweiter Wärmetauscher (50) angeordnet ist, wobei Fluid zum Betrieb einer vorgeschalteten Vorrichtung erwärmt wird.

6. Verfahren nach einem der vorstehenden Ansprüche,
**dadurch gekennzeichnet, dass**
die Abluft zwischen zwei benachbarten Reaktionsbereichen (20, 22, 24) jeweils für eine Dauer von mindestens 0,5 Sekunden strömt, und/oder dass die mindestens eine Heizeinheit (26, 28, 30) mit regenerativer Energie betrieben wird.

7. Verfahren nach einem der vorstehenden Ansprüche,
**dadurch gekennzeichnet, dass**
die Abluft in dem Niedrig-Temperatur-Reaktionsbereich (20) auf einen Temperaturbereich von 600° bis 700°C erwärmt wird und/oder dass die Abluft in dem Hoch-Temperatur-Reaktionsbereich (24) auf mindestens 800 °C erwärmt wird und/oder dass die Abluft in dem Mittel-Temperatur-Reaktionsbereich (22) auf einen Temperaturbereich von 700°C bis 800°C erwärmt wird.

8. Verfahren nach einem der vorstehenden Ansprüche,
**dadurch gekennzeichnet, dass**
die Temperatur der Abluft und/oder die Konzentration der organischen Bestandteile in der Abluft in dem Reaktionsraum gemessen wird/werden.

9. Anlage zur Reinigung von Abluft mittels thermischer Oxidation, wobei die Anlage (10) ausgebildet ist Abluft umfassend mindestens zwei Gruppen von organischen Bestandteilen ausgewählt aus Niedrigsiedern, Mittelsiedern und Hochsiedern zu reinigen, wobei die Anlage (10) folgende Merkmale aufweist:
- die Anlage (10) weist einen Einlass (14) für zu reinigende Abluft und einen Auslass (16) für gereinigte Abluft auf, wobei zwischen dem Einlass (14) und dem Auslass (16) ein Reaktionsraum (12) angeordnet ist,
- der Reaktionsraum (12) weist einen Niedrig-Temperatur-Reaktionsbereich (20) zur Oxidation der Gruppe an organischen Bestandteilen in der Abluft mit der niedrigsten Oxidationstemperatur auf, wobei der Niedrig-Temperatur-Reaktionsbereich (20) eine erste Wärmespeichereinheit aufweist (26),
- der Reaktionsraum (12) weist einen Hoch-Temperatur-Reaktionsbereich (24) zur Oxidation der Gruppe an organischen Bestandteilen in der Abluft mit der höchsten Oxidationstemperatur auf, wobei der Hoch-Temperatur-Reaktionsbereich (24) eine letzte Wärmespeichereinheit (30) aufweist.

10. Anlage nach dem vorstehenden Anspruch,
**dadurch gekennzeichnet, dass**
mindestens ein Reaktionsbereich (20, 24) mindestens eine Heizeinheit (32, 36) aufweist, wobei die Heizleistung der mindestens einen Heizeinheit (32,36) in Abhängigkeit der Temperatur der Abluft und/oder der Konzentration der organischen Bestandteile einstellbar ist, wobei, insbesondere, als mindestens eine Heizeinheit (32, 36) ein elektrisch betriebener Heizstab dient.

11. Anlage nach einem der vorstehenden Ansprüche,
**dadurch gekennzeichnet, dass**
der Niedrig-Temperatur-Reaktionsbereich (20) und der Hoch-Temperatur-Reaktionsbereich (24) in einer Strömungsrichtung (S) der Abluft betrachtet aufeinanderfolgend derart in demselben Reaktionsraum (12) angeordnet sind, dass die Abluft während eines kontinuierlichen Betreibens der Anlage (10) zur Reinigung von Abluft einen einzigen Strömungsweg durchströmt, wobei der Strömungsweg unveränderlich ist, wobei, insbesondere, zwischen dem Niedrig-Temperatur-Reaktionsbereich (20) und dem Hoch-Temperatur-Reaktionsbereich (24) ein Mittel-Temperatur-Reaktionsbereich (22) angeordnet ist, wobei der Mittel-Temperatur-Reaktionsbereich (22) eine mittlere Wärmespeichereinheit (28) aufweist.

12. Anlage nach einem der vorstehenden Ansprüche,
**dadurch gekennzeichnet, dass**
stromabwärts des Hoch-Temperatur-Reaktionsbereiches (24) mindestens ein erster Wärmetauscher (48) derart angeordnet ist, dass mittels des ersten Wärmetauschers (48) Abluft stromaufwärts des Einlasses (14) vorgewärmt wird,
und/oder dass stromabwärts des Hoch-Temperatur-Reaktionsbereiches (24) mindestens ein zweiter Wärmetauscher (50) derart angeordnet ist, dass Luft zum Betrieb einer vorgeschalteten Vorrichtung erwärmt wird.

13. Anlage nach einem der vorstehenden Ansprüche,
**dadurch gekennzeichnet, dass**
zwischen zwei benachbarten Reaktionsbereichen(20, 22, 24) jeweils ein Abstand ausgebildet ist.

14. Anlage nach dem vorstehenden Anspruch,
**dadurch gekennzeichnet, dass**
die mindestens eine Heizeinheit (32, 34, 36) mit einer Quelle zur Erzeugung regenerativer Energie verbunden ist.

15. Anlage nach einem der vorstehenden Ansprüche,
**dadurch gekennzeichnet, dass**
mindestens ein Temperatursensor und/oder mindestens Konzentrationsmessgerät (44) in dem Reaktionsraum (12) angeordnet ist.
